**Europäisches Patentamt**

**European Patent Office**

**Office européen des brevets**

(19)

(11) **EP 1 477 978 A2**

(12) **EUROPEAN PATENT APPLICATION**

(43) Date of publication:
**17.11.2004 Bulletin 2004/47**

(51) Int Cl.⁷: **G11B 7/24**, G11B 7/26

(21) Application number: **04011574.3**

(22) Date of filing: **14.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **16.05.2003 JP 2003138818**

(71) Applicant: **MATSUSHITA ELECTRIC INDUSTRIAL
CO., LTD.**
**Kadoma-shi, Osaka 571-8501 (JP)**

(72) Inventors:
• **Nagata, Kenichi**
  **Nishinomiya-shi, Hyogo (JP)**
• **Kusada, Hideo**
  **Osaka-shi, Osaka (JP)**

(74) Representative: **Böckelen, Rainer**
**Tiedtke-Bühling-Kinne & Partner (GbR),**
**TBK-Patent**
**Bavariaring 4**
**80336 München (DE)**

(54) **Optical information recording medium and method for producing the same**

(57)     The present invention pertains to an information recordable and erasable, phase-change optical disk, particularly to a 4.7GB DVD-RAM disk. Provided is a recording medium having a short tact time in layer formation, and superior jitter characteristics, cross erasing characteristics, and cycle characteristics. The recording medium has at least a reflective layer, a recording layer, a light-incident-side protective layer, a first resin layer, and a light-incident-side substrate in this order on a substrate formed with a guide groove. The first resin layer is formed over the recording layer by a gap between 1 nm and 50 nm. This allows a small thickness of light-incident side protective layer and a small gap between the recording layer and the first resin layer to be used, which improves tact time, while also securing repeatability of erasing/erasing.

## FIG.1

SUBSTRATE 2 SURFACE

1 SUBSTRATE
3 REFLECTIVE LAYER
4 ABSORPTIVE LAYER
5 REFLECTIVE–SIDE PROTECTIVE LAYER
6 REFLECTIVE–SIDE BOUNDARY LAYER
7 RECORDING LAYER
8 LIGHT–INCIDENT–SIDE BOUNDARY LAYER
9 LIGHT–INCIDENT–SIDE PROTECTIVE LAYER
10 FIRST RESIN LAYER
12 SECOND RESIN LAYER
11 LIGHT–INCIDENT–SIDE SUBSTRATE

EP 1 477 978 A2

**Description**

## BACKGROUND OF THE INVENTION

1. Field of the Invention

The present invention relates to a large-capacity-information recordable and reproducible optical information recording medium with use of laser light, and a method for producing the optical information recording medium.

2. Description of the Related Art

There are known DVD-RAM media having a recording layer made of a phase changing material, as an actual product of optical information recording media capable of recording and reproducing signals with use of laser light. The DVD-RAM media has a substrate of a diameter of 120 mm, with a single-sided surface having a user-recordable capacity of 4.7GB, and a double-sided surface having a user-recordable capacity of 9.4GB (hereinafter, such DVD-RAM media are called as "4.7GB DVD-RAM"). The 4.7GB DVD-RAM records and reproduces signals with use of a laser beam of the wavelength 460 nm, with a standard data transmission rate of 22 Mbps.
In the following, main technologies used in the 4.7GB DVD-RAM are described:

(1) Jpn. J. Appl. Phys. 32 (1993) p. 5324, for example, recites the Land and Groove (L&G) recording for realizing a large-capacity recording. The Land and Groove recording is a technology of recording signals both in a groove track and on a land track of an optical disk substrate surface. It is necessary to minimize a phase difference between light reflected from the recording medium while the recording layer is in an amorphous state, and light reflected from the recording medium while the recording layer is in a crystalline state in order to realize the L&G recording in the phase-change optical disk.
(2) There is known a technology relating to a so-called "thermally balanced structure" in which Ac>Aa is established, where Aa represents light absorbency of the recording layer in an amorphous state, and Ac represents light absorbency of the recording layer in a crystalline state. The thermally balanced structure is established to improve erasing efficiency in overwrite, namely, to reduce jitter of reproduction signals after overwrite. This technology is, for instance, disclosed in Int. Conf. Advanced Materials (1993) 2/B, Information Storage Materials, Tokyo (1994) p. 1035.
(3) For instance, Jpn. J. Appl. Phys. 69 (1991) p.2849 discloses a material for a recording layer capable of attaining high-speed crystallization.
(4) For example, Jpn. J. Appl. Phys. 37 (1998) p.2104 discloses a technology relating to a boundary layer provided proximate to a recording layer to secure desirable cycle characteristics.

An example of a structure of the 4.7GB DVD-RAM developed by the inventors is such that a light-incident-side protective layer, a light-incident-side nitride-deposited boundary layer, a recording layer, a reflective-side nitride-deposited boundary layer, a reflective-side protective layer, an absorptive layer, and a reflective layer are formed one over another in this order on a light-incident-side substrate made of polycarbonate in which a guide groove is formed. The light-incident-side substrate has a thickness of 0.6 mm. a diameter of 120 mm, and a track pitch of 0.615 $\mu$m. The light-incident-side protective layer is primarily made of $ZnS-SiO_2$ with a thickness of about 150 nm. The light-incident-side nitride-deposited boundary layer has a thickness of several nm. The recording layer is primarily made of Ge-Sb-Te with a thickness of about 9 nm. The reflective-side nitride-deposited boundary layer has a thickness of about several nm. The reflective-side protective layer is primarily made of $ZnS-SiO_2$ with a thickness of about 40 nm. The absorptive layer is primarily made of Ge or Si with a thickness of about 40 nm. The reflective layer is primarily made of Ag or Al with a thickness of about 100 nm.
Generally, a single wafer sputtering apparatus is employed considering mass productivity in a process of forming the respective layers.
Concerning the layer forming process for the 4.7GB DVD-RAM, Japanese Patent Laid Open Publication No. 2002-31279, for example, proposes a novel disk structure capable of shortening a tact time in layer formation. It is essentially important to minimize the thickness of the light-incident-side protective layer having a generally larger thickness than that of the other layers in order to shorten the layer formation tact time. The publication discloses a technique in which a light-incident-side protective layer of a small thickness can attain optical characteristics substantially equivalent to those of the conventional disk structure by setting the refraction index of the light-incident-side protective layer at a wavelength of the laser beam irradiated for information reproduction substantially equal to or lower than the refraction index of the light-incident-side substrate at the same wavelength. The publication recites that, in case that the light-incident-side protective layer is made of $ZnS-SiO_2$, even if the layer thickness is drastically lessened, for example, from 150 nm in the conventional layer to 50 nm or less, optical characteristics substantially equivalent to those of the conventional disk structure are attained, and optical information recording media in compliance with the format for the 4.7GB DVD-RAM are producible.

According to the invention disclosed in the above publication, because the thickness of the light-incident-side protective layer can be considerably reduced, as compared with the prior art, the layer formation tact time can be shortened. There rises, however, a drawback in the art disclosed in the above publication that repeating characteristics of information recording/erasing are remarkably deteriorated, as compared with those of the conventional disk structure. The light-incident-side protective layer is inherently provided to serve as a heat barrier for blocking the light-incident-side substrate formed with the guide groove from damages such as thermal deformation, in such a condition that the recording layer is overheated beyond the melting point thereof by irradiation of a laser beam for information recording. Therefore, an idea of remarkably reducing the thickness of the light-incident-side protective layer in an attempt to shorten the layer formation tact time inevitably may likely to cause thermal deformation of the light-incident-side substrate, thereby remarkably deteriorating repeating characteristics of information recording/erasing of the above arrangement adopting the above idea, as compared with those of the conventional disk structure.

## SUMMARY OF THE INVENTION

In view of the above, it is a primary object of the present invention to provide an optical information recording medium that has overcome the above problems and enables to realize desirable repeating characteristics of information recording/erasing.

The present invention, according to an aspect, is directed to an optical information recording medium capable of recording and reproducing information with use of laser light, wherein at least a reflective layer, a recording layer, a light-incident-side protective layer, a first resin layer, and a light-incident-side substrate are formed one over another in this order on a substrate formed with a guide groove, and the first resin layer is formed over the recording layer by a gap between 1 nm and 50 nm.

The present invention, according to another aspect, is directed to a method for producing an optical information recording medium capable of recording and reproducing information with use of laser light, comprising the steps in the order of: forming at least a reflective layer, a recording layer, and a light-incident protective layer one over another in this order on a substrate formed with a guide groove; and attaching a light-incident-side substrate on the light-incident-side protective layer with a first resin layer formed therebetween, wherein the first resin layer is formed over the recording layer by a gap between 1 nm and 50 nm.

The present invention, according to yet another aspect, is directed to a method for producing an optical information recording medium capable of recording and reproducing information with use of laser light, comprising the steps in the order of: forming at least a reflective layer, a recording layer, and a light-incident protective layer one over another in this order on a substrate formed with a guide groove; forming a first resin layer on the light-incident-side protective layer; and attaching a light-incident-side substrate on the first resin layer with a second resin layer formed therebetween, wherein the first resin layer is formed over the recording layer by a gap between 1 nm and 50 nm.

According to the present invention, provided is an optical information recording medium having a small thickness of the light-incident-side protective layer, and a small gap between the recording layer and the first resin layer, with secured repeating characteristics of information recording/erasing.

These and other objects, features and advantages of the present invention will become more apparent upon reading of the following detailed description along with the accompanying drawings.

## BRIEF DESCRIPTION OF THE DRAWINGS

FIG. 1 is a cross-sectional view showing a structure of an optical information recording medium embodying the present invention; and
FIG. 2 is a diagram schematically showing a recording/reproducing apparatus for recording and reproducing information on and from the optical information recording medium.

## DETAILED DESCRIPTION OF THE PREFERRED EMBODIMENTS

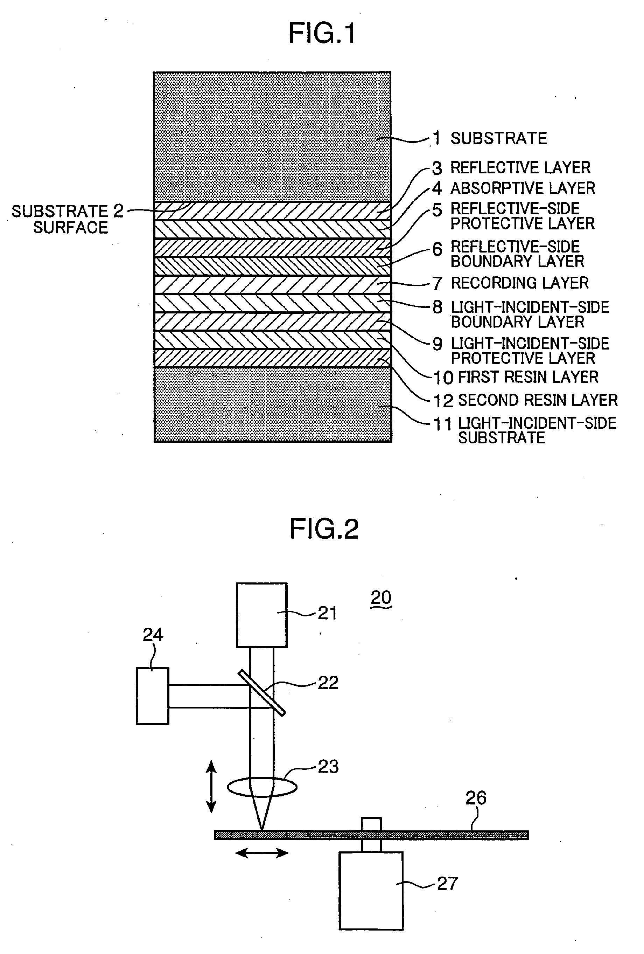

In the following, preferred embodiments of the present invention are described referring to the accompanying drawings. It should be appreciated that the present invention is not limited to the below-mentioned embodiments. FIG. 1 is a cross-sectional view schematically showing a laminated structure of an optical information recording medium (optical disk) in a radial direction thereof embodying the present invention.

The optical information recording medium is constructed in such a manner that a substrate 1, a reflective layer 3, an absorptive layer 4, a reflective-side protective layer 5, a reflective-side boundary layer 6, a recording layer, 7, a light-incident-side boundary layer 8, a light-incident-side protective layer 9, a first resin layer 10, a second resin layer 12, and a light-incident-side substrate 11 are deposited one over another in this order. The respective layers are made of a metallic film. In FIG. 1, a laser beam for information recording and reproduction is irradiated from the side of the light-incident-side substrate 11.

The substrate 11 is a resinous plate made of polycarbonate or a like material. A continuous spiral groove (a guide groove or a track) is formed in a surface 2 of the substrate 1.

The reflective layer 3 is adapted for dissipating heat generated in the absorptive layer 4. The reflective layer 3 is made of a metal such as Au, Ag, Al, Cu, or Cr, as a main ingredient. A particularly preferred material for the reflective layer 3 is Ag and Al which have a high thermal conductivity, is chemically stable, and is relatively of low cost. The term "main ingredient" throughout the specification and claims represents a component having a largest content in terms of atomic mass ratio relative to the total content of a target substance.

Preferably, the reflective layer 3 has a thickness of 50 nm or larger. However, since disk characteristics do not change if the thickness of the reflective layer 3 exceeds 150 nm, a preferable thickness range is between 50 nm and 150 nm.

The absorptive layer 4 is adapted for absorbing laser light irradiated for information recording. The absorptive layer 4 is made of Ge, Cr, Si, or a like material, as a main ingredient. The absorptive layer 4 is provided to facilitate light absorption correction on the recording layer 7. Providing the absorptive layer 4 enables to regulate a phase difference between light reflected from the optical information recording medium while the recording layer 7 is in an amorphous state, and light reflected from the optical information recording medium while the recording layer 7 is in a crystalline state. In particular, it is difficult to minimize the phase difference between the respective reflected lights while keeping a desirable heat balance against irradiation of a laser beam in the vicinity of the wavelength of 660 nm, without providing the absorptive layer 4. In view of this, desired optical characteristics required for the material constituting the absorptive layer 4 has a refraction index n of not smaller than 2 and not larger than 5, and an extinction coefficient k of not smaller than 1.5 and not larger than 4.5.

Further, providing the absorptive layer 4 enables to suppress cross erasing due to information recording in bordering tracks in a practically allowable range. Cross erasing is a phenomenon as to how much data is erased in bordering tracks in recording signals. A mechanism as to how cross erasing is suppressed is described as follows. Heat is generated in the absorptive layer 4 while the recording medium is irradiated with a laser beam of a high power for recording, with the result that temperature rise of the recording layer 7 is promoted, and high sensitivity recording is realized. Once the laser irradiation for recording is terminated, however, the heat in the absorptive layer 4 is dissipated toward the reflective layer 3 made of a high thermal conductive material, thus maximally suppressing thermal diffusion toward the recording layer 7. If the absorptive layer 4 has an exceedingly small thickness, sufficient effect by the heat generation is not obtainable. On the other hand, if the absorptive layer 4 has an exceedingly large thickness, the heat cannot be sufficiently dissipated toward the reflective layer 3. In view of this, a desired thickness of the absorptive layer 4 ranges between 20 nm and 60 nm.

It is desirable to make the reflective-side protective layer 5 of a material having a refraction index larger than the refraction index of the material for the light-incident-side substrate 11. Further, it is desirable to use a material which is physically and chemically stable. Such a material has a melting point and a softening temperature higher than those of the material for the recording layer 7, and does not form a solid solution with the material for the recording layer 7. Examples of the preferred materials include dielectrics of ZnS, Zr oxide, Cr oxide, Ta oxide, and yttrium oxide, and a material composed of one of these dielectrics, as a main ingredient. Among these, a particularly preferred material is a mixture of ZnS and $SiO_2$.

Preferably, the material for the reflective-side protective layer 5 has a refraction index of not smaller than 2.0 and not larger than 2.4 in the vicinity of the wavelength of 660 nm, as the optical characteristics of the material. Preferably, the reflective-side protective layer 5 has a thickness ranging from 20 nm to 60 nm. Specifically, as the thickness of the reflective-side protective layer 5 decreases, the light absorbency of the recording layer 7 is lowered. If the thickness of the reflective-side protective layer 5 is less than 20 nm, recording sensitivity is remarkably lowered. On the other hand, as the thickness of the reflective-side protective layer 5 increases, the light reflectance of the optical information recording medium while the recording layer 7 is in a crystalline state is lowered. If the thickness of the reflective-side protective layer 5 exceeds 60 nm, a sufficiently large reflectance is not obtained.

A main ingredient for the reflective-side boundary layer 6 and the light-incident-side boundary layer 8 comprises a nitride, a nitroxide, an oxide as represented by the general formula "X"-N or "X"-O-N, carbon (C), or a carbide as represented by the general formula "Y"-C, or a mixture thereof. Here, it is preferable that the compound "X" may contain at least one element selected from the group consisting of Ge, Cr, Zr, Si, Al, and Te, and that the compound "Y" may be Si. Providing the boundary layer 6 enables to suppress mutual diffusion of the element constituting the recording layer 7, and the element constituting the reflective-side protective layer 5 and the light-incident-side protective layer 9 each serving as a dielectric layer, and to improve repeating characteristics (cycle characteristics) of recording/erasing. Effects of the boundary layers 6 and 8 composed of a nitride or a like component are recited in detail in Japanese Patent Laid Open Publication No. 4-52188, for instance.

It is preferable that the boundary layers 6 and 8 each have a sufficiently small absorptive coefficient (preferably, 0.2 or less) relative to the laser light irradiated for information recording, as well as a sufficiently small thickness. The thickness of the boundary layers 6 and 8 preferably ranges from 1 nm to 20 nm, and more preferably from 2 nm to 10 nm. The improvement effect on cycle characteristics by providing the boundary layers 6 and 8 is particularly notable if the thickness of the recording layer 7 is as small as 10 nm or less. The boundary layers 6 and 8 may be omitted in case that improvement on repeating characteristics of recording/erasing can be neglected to some extent. Alternatively, the material of the boundary layer 6 may be different from that of the boundary layer 8.

It is required that the material composing the recording layer 7 is a material that causes structure transition between crystalline state and amorphous state. A preferred example of the material is a material having Te, Sb, And Ge as main ingredients. If such a material is expressed by $Ge_xSb_yTe_z$, the material having a composition ratio in terms of atomic mass ratio: $0.10 \leqq x < 0.50$, $0 \leqq y \leqq 0.25$, $0.45 \leqq z \leqq 0.65$, and $x+y+z=1$ is superior. Further, it is preferable that the material composing the recording layer 7 is a material composed of Te, Sb, Ge, and Sn; a material composed of Te, Sb, Ge, and Bi; or a material composed of Te, Sb, Ge, Sn, and Bi, wherein the Sn or Bi content is 10 at.% or less.

An exceedingly small thickness of the recording layer 7 fails to obtain a sufficiently large reflectance, and an exceedingly large thickness of the recording layer 7 fails to provide desirable repeating characteristics of recording/erasing. In view of this, a preferred thickness of the recording layer 7 ranges between 7 nm and 10 nm.

It is desirable that the material for the light-incident-side protective layer 9 has a refraction index smaller than that of the material for the light-incident-side substrate 11. Further, it is desirable to use a material which is physically and chemically stable. Such a material has a melting point and a softening temperature higher than those of the material for the recording layer 7, and does not form a solid solution with the material for the recording layer 7. Examples of the preferred material include dielectrics of an Al oxide (e.g., $Al_2O_3$), an Si oxide (e.g., $SiO_2$), an Mg oxide, and a fluoride, and a material composed of one of these dielectrics, as a main ingredient.

Optical characteristics of the material composing the light-incident-side protective layer 9 are preferably equivalent to or less than the refraction index of the light-incident-side substrate 11. In view of this, in case of using polycarbonate as the material for the light-incident-side substrate 11, it is preferable that the light-incident-side protective layer 9 has a refraction index of not smaller than 1.4 and not larger than 1.6 in the vicinity of the wavelength of 660 nm of the irradiated laser light. Even if a material having a refraction index larger than that of the material for the light-incident-side substrate 11 is used for the light-incident-side protective layer 9, it is necessary to select a material for the light-incident-side protective layer 9, so that a refraction index difference between the layers 9 and 11 doe not exceed 0.1. The reason for this will be described later in detail.

The respective reflective layer 3, absorptive layer 4, reflective-side protective layer 5, reflective-side boundary layer 6, recording layer 7, light-incident-side boundary layer 8, and light-incident-side protective layer 9 are generally formed according to a sputtering method. Alternatively, electron beam vapor deposition, ion plating, and chemical vapor deposition (CVD) or an equivalent method may be applicable.

The light-incident-side substrate 11 is made of a transparent resin such as polycarbonate.

The light-incident-side substrate 11 may be attached to the light-incident-side protective layer 9 with the first resin layer 10 made of a UV curable resin or a like material formed therebetween. Further alternatively, after the first resin layer 10 is attached to the light-incident-side protective layer 9, and the second resin layer 12 of a UV curable resin or a like material is formed between the first resin layer 10 and the light-incident-side substrate 11, the light-incident-side substrate 11 may be attached to the first resin layer 10. In the latter case, it is most preferable to form the first resin layer 10 by spin coating.

Next, appropriate thicknesses of the respective layers are described. It is required to basically satisfy the following five conditions 1) through 5) regarding the optical characteristics in designing the configuration of the 4.7 GB DVD-RAM, for example.

1) To maximize a difference in reflectance of the recording medium between while the recording layer 7 is in a crystalline state and while the recording layer 7 is in an amorphous state. This is an essential requirement to raise the amplitude of the signal.

2) To set a relation between Aa and Ac to satisfy Aa<Ac, preferably Ac/Aa>1.2, where Aa represents light absorbency while the recording layer 7 is in an amorphous state, and Ac represents light absorbency while the recording layer 7 is in a crystalline state.

3) To minimize a phase difference between reflected light from the optical information recording medium while the recording layer 7 is in an amorphous state, and reflected light from the optical information recording medium while the recording layer 7 is in a crystalline state. This is an essential requirement to realize the Land and Groove recording. Empirically, it is preferable that the phase difference is $0.05\pi$ or less in absolute value.

4) To maximize an average of the light absorbency Aa while the recording layer 7 is in an amorphous state, and the light absorbency Ac while the recording layer 7 is in a crystalline state. This is an essential requirement to secure high sensitivity recording.

5) To obtain desirable repeating characteristics of recording/erasing.

The inventors successfully produced, as a result of experiments, a recording medium in compliance with the format for the 4.7 GB DVD-RAM while keeping the thicknesses of the respective layers in an allowable range by: forming the light-incident-side protective layer 9 having a thickness of about 150 nm, with use of a material having a refraction index of not smaller than 2. 0 and not larger than 2.4; forming the boundary layers 6 and 8 over and beneath the recording layer 7 with a thickness ranging from 1 nm to 10 nm; setting the thickness of the recording layer 7 to about 9 nm; forming the reflective-side protective layer 5 having a thickness of about 40 nm, with use of a material having a refraction index of not smaller than 2.0 and not larger than 2.4; setting the thickness of the absorptive layer 4 to about 40 nm; and setting the thickness of the reflective layer 3 to about 100 nm. The inventors also confirmed that a recording medium without formation of the boundary layers 6 and 8 could satisfy the disk characteristics other than the cycle characteristics, although the cycle characteristics showed considerable degradation.

In the aforementioned experiments, the inventors also confirmed that even if the refraction index of the material for the light-incident-side protective layer 9 is set equal to or lower than that of the material for the light-incident-side substrate 11, the resultant recording medium is provided with the optical characteristics such as reflectance, and light absorbencies of the recording layer and the absorptive layer substantially equivalent to those of the conventional arrangement, and recording/reproducing characteristics substantially equivalent to those of the conventional arrangement are obtained except for repeating characteristics of recording/erasing, which will be described later.

In the above arrangement, as compared with the conventional arrangement, the thickness of the light-incident-side protective layer 9 can be remarkably decreased, e.g., to about 1/10 to the thickness of the light-incident-side protective layer of the conventional recording medium, provided that the light-incident-side protective layer 9 be formed of a material having a refraction index smaller than that of the material for the light-incident-side substrate 11, such as an Si oxide ($SiO_2$) or an Al oxide ($Al_2O_3$). Therefore, this arrangement makes it possible to form the light-incident-side protective layer 9 at a high speed, if a layer forming apparatus having a construction identical to that of the conventional apparatus is used.

In the conventional DVD-RAM disks, however, a small thickness of the light-incident-side protective layer and a small gap between the recording layer and the light-incident-side protective layer may likely to cause thermal deformation on the surface of the light-incident-side substrate, as the substrate surface is affected by temperature rise on the recording layer due to irradiation of laser light for information recording. A reason why such a phenomenon occurs is presumed as follows. The conventional DVD-RAM disks are produced by implementing the steps of: forming a guide groove in the surface of the light-incident-side substrate; forming the light-incident-side protective layer, the light-incident-side boundary layer, the recording layer, the reflective-side boundary layer, the reflective-side protective layer, the absorptive layer, and the reflective layer one over another in this order on the guide-groove-formed substrate (hereinafter, this layer formation is called as "forward layer formation"): and attaching the protective substrate to the reflective layer. The inventors confirmed, as a result of experiments, if the thickness of the light-incident-side protective layer is exceedingly small, for example, about 50 nm or less, or in an extreme case as 40 nm or less, the guide groove in the light-incident-side substrate is subjected to thermal deformation by irradiation of laser light for information recording, with the result that repeating characteristics of recording/erasing are remarkably deteriorated.

On the other hand, as mentioned above, the inventive recording medium is produced in such a manner that the layers are formed one over another in the order opposite to the forward layer formation. Specifically, the reflective layer 3, the absorptive layer 4, the reflective-side protective layer 5, the reflective-side boundary layer 6, the recording layer 7, the light-incident-side boundary layer 8, and the light-incident-side protective layer 9 are formed one over another on the substrate 1 having the guide-groove-formed surface 2 (hereinafter, this order of layer formation is called as "reverse layer formation"). The recording medium produced according to the reverse layer formation in which the light-incident-side substrate 11 is attached to the light-incident-side protective layer 9 with the first resin layer 10 formed therebetween provides a remarkable improvement on repeating characteristics of recording/erasing, as compared with the recording medium produced according to the forward layer formation, even if the thicknesses of the respective layers are identical to each other between the former recording medium and the latter recording medium.

It is conceived that a first reason for such an advantage is because the gap between the guide groove and the recording layer 7 is relatively long in the optical information recording medium produced according to the reverse layer formation. Another reason is that heat from the recording layer 7 is easily dissipated in the reflective layer 3 since the reflective layer 3 made of the high thermal conductive metal as a main ingredient is provided between the recording layer 7 and the guide groove in the substrate 1, which makes it difficult to transfer the heat toward the guide groove to thereby prevent the guide groove from thermal deformation. Taking these into consideration, according to the present invention, it is effective to set the gap between the recording layer 7 and the light-incident-side substrate 11 to 50 nm or less, if the thickness of the light-incident-side protective layer 9 is relatively small or in a like condition. As the thickness of the light-incident-side protective layer 9 is larger, desirable repeating characteristics of recording/erasing is obtainable. Accordingly, it is fundamentally impossible to eliminate the light-incident-side protective layer 9. On the other hand, an exceedingly thick light-incident-side protective layer 9 may make it difficult to raise layer formation efficiency.

In case of producing the recording medium according to the reverse layer formation, it is preferable that the following mathematical expression (1) is satisfied:

$$n1 \leqq n3 + 0.1 \tag{1}$$

where n1 represents a refraction index of the light-incident-side protective layer 9, and n3 represents a refraction index of the light-incident-side substrate 11.
It is more preferable that the following mathematical expression (2) is satisfied:

$$n1 \leqq n3 \tag{2}$$

The relationship of the refraction index between the light-incident-side protective layer 9 and the light-incident-side substrate 11 is also applied to a relationship of the refraction index between the light-incident-side protective layer 9 and the first resin layer 10. Specifically, it is preferable that the following mathematical expression (3) is satisfied:

$$n1 \leqq n2 + 0.1 \tag{3}$$

where n1 represents the refraction index of the light-incident-side protective layer 9, and n2 represents the refraction index of the first resin layer 10. It is more preferable that the following mathematical expression (4) is satisfied:

$$n1 \leqq n2 \tag{4}$$

The relationship of the refraction index between the light-incident-side protective layer 9 and the first resin layer 10 is also applied to a relationship of the refraction index n1 of the light-incident-side protective layer 9 and the refraction index of the second resin layer 12.

A reason for setting the requirement that the refraction index n1 of the light-incident-side protective layer 9, the refraction index n2 of the first resin layer 10, and the refraction index n3 of the light-incident-side substrate 11 satisfy the above mathematical expressions is as follows. If the refraction index n1 of the light-incident-side protective layer 9 is larger than the refraction index n3 of the light-incident-side substrate 11, it is difficult to satisfy the above five optical characteristics in designing the DVD-RAM configuration, and accordingly, to comply with the format of the 4.7GB DVD-RAM. The results of investigation conducted by the inventors reveal that if the refraction index n1 of the light-incident-side protective layer 9 exceeds the refraction index n3 of the light-incident-side substrate 11 by 0.1, it is impossible to obtain a DVD-RAM configuration in compliance with the DVD-RAM format. On the other hand, if the refraction index n1 of the light-incident-side protective layer 9 is smaller than the refraction index n3 of the light-incident-side substrate 11, there is secured a sufficiently wide and allowable thickness range for the light-incident-side protective layer 9, the recording layer 7, the reflective-side protective layer 5, and the like. The relation between the refraction indexes n1 and n3 is applied to the relation between the refraction indexes n1 and n2.

In addition to the reverse layer formation, it is preferable to make the first resin layer 10 of a material having a heat resistance larger than that of the material for the light-incident-side substrate 11 to improve repeating characteristics of recording/erasing. Specifically, it is preferable to make the first resin layer 10 of a material having a softening temperature higher than that of the material for the light-incident-side substrate 11, or to make the first resin 10 of a material having a hardness higher than that of the material for the light-incident-side substrate 11. In either of the cases, the first resin layer 10 may be formed over the light-incident-side protective layer 9 having a refraction index smaller than that of the material for the first resin layer 10 to cover the light-incident-side protective layer 9, and the light-incident -side substrate 11 may be formed on the first resin layer 10. The inventors confirmed that this technique enables to improve repeating characteristics of recording/erasing through experiments.

In this embodiment, the light-incident-side substrate 11 is attached to the light-incident-side protective layer 9 with the first resin layer 10 and the second resin layer 12 being formed therebetween. Alternatively, the light-incident-side substrate 11 may be directly attached to the first resin layer 10. In such an altered arrangement, since the first resin layer 10 serves, as well as an adhesive, as a heat barrier layer for keeping the light-incident-side substrate 11 from thermal deformation due to temperature rise in information recording, the range of material selection for the first resin layer 10 is restricted. On the other hand, as exemplified in the embodiment, the first resin layer 10 serves as a heat barrier layer in information recording, and the second resin layer 12 serves as the adhesive by forming the second resin layer 12 between the light-incident-side substrate 11 and the light-incident-side protective layer 9, in addition to the first resin layer 10 in attaching the light-incident-side substrate 11 to the light-incident-side protective layer 9. This arrangement is advantageous in widening the range of material selection for the first and second resin layers 10 and 12. It is necessary to secure at least 1 $\mu$m or larger for the thickness of the first resin layer 10 both in the case of forminig the first resin layer alone and the case of forming the first and second resin layers. This is because an exceedingly small thickness of the first resin layer 10 fails to provide improvement effect on repeating characteristics of recording/erasing. On the other hand, an exceedingly large thickness of the first resin layer 10 makes it difficult to obtain a uniform thickness for the first resin layer 10. The results of experiments conducted by the inventors reveal that forming a first resin layer 10 having a uniform thickness over 20 $\mu$m is difficult.

It is required to set the sum of the thicknesses of the first resin layer 10, the second resin layer 12, and the light-incident-side substrate 11 to about 0.60 mm in case of producing the DVD-RAM disks.

As mentioned above, the present invention is directed to a disk arrangement capable of shortening a tact time in layer formation and providing desirable repeating characteristics of recording/erasing. The present invention, however, is applied not only to the DVD-RAM disks but also to DVD-RW disks and DVD+RW disks, for example.

In the following, examples conducted by the inventors are described in detail.

(Example 1)

As shown in Table 1, optical disks as Example 1 were produced according to the reverse layer formation. Specifically, the reflective layer 3, the absorptive layer 4, the reflective-side protective layer 5, the reflective-side boundary layer 6, the recording layer 7, the light-incident-side boundary layer 8, and the light-incident-side protective layer 9 were formed one over another in this order on the substrate 1 having the surface 2 formed with a guide groove, followed by attaching the light-incident-side substrate 11 on the light-incident-side protective layer 9 with the first resin layer 10 formed therebetween. In Example 1, the optical disks had the thicknesses of the light-incident-side protective layers 9 of 1 nm, 20 nm, and 47 nm, respectively.

The substrate 1 was made of polycarbonate with 120 mm in diameter and 0.6 mm in thickness. The guide groove was formed according to the 4.7 GB DVD-RAM format in which a land track and a groove track were formed with a pitch of 1.2 $\mu$m and a groove depth of 70 nm.

As shown in Table 1, optical disks as Comparative Example 1 were produced according to the forward layer formation. Specifically, the light-incident-side protective layer 9, the light-incident-side boundary layer 8, the recording layer 7, the reflective-side boundary layer 6, the reflective-side protective layer 5, the absorptive layer 4, and the reflective layer 3 were formed one over another in this order on the light-incident-side substrate 11 with the surface 2 formed with a guide groove, followed by attaching the substrate 1 on the reflective layer 3 with a resin layer formed therebetween. In Comparative Example 1, the thicknesses of the respective layers were identical to those of the respective corresponding layers in Example 1. Similar to Example 1, in Comparative Example 1, the optical disks had the thicknesses of the light-incident-side protective layers 9 of 1 nm, 20 nm, and 47 nm, respectively.

The light-incident-side substrate 11 was made of polycarbonate with 120 mm in diameter and 0.6 mm in thickness. The guide groove was formed according to the 4.7 GB DVD-RAM format in which a land track and a groove track were formed with a pitch of 1.2 $\mu$m and a groove depth of 70 nm.

Table 1

| Sample Name | Comparative Example 1 | Example 1 |
|---|---|---|
| Layer formation | forward | reverse |
| | light-incident-side substrate | substrate |
| 1st layer | SiO$_2$ light-incident-side protective layer | Al-3at.%Ti reflective layer, thickness: 100nm |
| 2nd layer | Ge$_{70}$N$_{30}$ boundary layer, thickness: 3 nm | Ge$_{70}$CR$_{30}$ absorptive layer, thickness: 40 nm |
| 3rd layer | Ge$_{70}$Sb$_{13}$Te$_{52}$Sn$_5$ recording layer, thickness: 9 nm | ZnS-20mol%SiO$_2$ reflective-side protective layer, thickness: 40 nm |
| 4th layer | Ge$_{70}$N$_{30}$ boundary layer, thickness: 5 nm | Ge$_{70}$N$_{30}$ boundary layer, thickness: 5 nm |
| 5th layer | ZnS-20mol%SiO$_2$. reflective-side protective layer, thickness: 40 nm | Ge$_{30}$Sb$_{13}$Te$_{52}$Sn$_5$ recording layer, thickness: 9 nm |
| 6th layer | Ge$_{70}$Cr$_{30}$ absorptive layer, thickness: 40 nm | Ge$_{70}$N$_{30}$ boundary layer, thickness: 3 nm |
| 7th layer | Al-3at.%Ti reflective layer, thickness: 100 nm | SiO$_2$ light-incident-side protective layer |
| | reflective-side substrate was attached to resin layer (DVD003 of Nippon Kayaku Co., Ltd., thickness: 5 $\mu$m). | light-incident-side substrate was attached to first resin layer (DVD003 of Nippon Kayaku Co., Ltd., thickness: 5 $\mu$ m). Sum of thicknesses of resin layer and light-incident-side substrate was 0.60mm. |

After the recording layer 7 of each of the optical disks was crystallized by an initializer using a laser beam, signals were recorded in the guide groove (groove track) and on the guide groove (land track) by a recording/reproducing apparatus 20 as shown in FIG. 2, and the recorded signals were reproduced. The recording/reproducing apparatus 20 is a known device equipped with a semiconductor laser 21 as a laser light source, a half mirror 22, an objective lens 23, and a photo detector 24. The recording/reproducing apparatus 20 is operated in such a manner that an optical disk 26 is rotated by a spindle motor 27, a laser beam irradiated from the semiconductor laser 21 is passed through the half mirror 22, and condensed on the rotating optical disk 26 via the objective lens 23, the light reflected from the optical disk 26 is passed through the object lens 23, and is detected by the photo detector 24 after being reflected on the half mirror 22. The recording/reproducing apparatus 20 is provided with a tracking servo mechanism (not shown) and a focus servo mechanism (not shown).

A laser beam used in information recording and reproducing is a laser beam of the wavelength of 660 nm. The objective lens 23 has an NA of 0.6. Information was recorded in compliance with the format of the 4.7 GB DVD-RAM, in which the linear velocity for recording: 8.2 m/s, the modulation system: 8/16, RLL: (2, 10), and shortest mark length: $0.42 \mu m$. Recording characteristics in compliance with the format of the 4.7 GB DVD-RAM were obtained with respect to each of the disk samples in Example 1 and Comparative Example 1 in which recording power for minimizing the jitter of the reproduction signals was selected.

Repeating characteristics (cycle characteristics) of recording/erasing were evaluated at the aforementioned selected recording power. The cycle characteristics were evaluated based on the number of cycles at which the jitter of the reproduction signals was degraded by 3% at one-time recording with respect to the groove track and the land track. The results of experiments are as shown in Table 2.

Table 2

|  | Thickness of light-incident-side protective layer | 1mm | 20mm | 47mm |
|---|---|---|---|---|
| Comp. Ex. 1 | number of cycles on groove track | 1 | 10 | 50 |
|  | number of cycles on land track | 1 | 2 | 10 |
| Ex. 1 | number of cycles on groove track | 5 | 1,000 | 3,000 |
|  | number of cycles on land track | 3 | 300 | 1,000 |

As is obvious from Table 2, the disk samples in Example 1 employing the reverse layer formation have improved cycle characteristics in the respective disk samples where the thicknesses of the light-incident-side protective layers 9 are different from each other, as compared with the disk samples in Comparative Example 1 employing the forward layer formation. Particularly, in case that the thicknesses of the light-incident-side protective layers 9 were 20 nm and 47 nm, a difference in cycle characteristics between Example 1 and Comparative Example 1 was remarkably large. The cycle characteristics of the disk sample in Example 1 having a thickness of the light-incident-side protective layer 9 of 1 nm were inferior to those of the disk samples in Comparative Example 1 having thicknesses of 20 nm and 47 nm. Despite such a phenomenon, Example 1 is advantageous in shortening the tact time in layer formation.

A result of study on the material composing the first resin layer 10 reveals that there is a strong correlation between the softening temperature and hardness of the material, and repeating characteristics of recording/erasing. Namely, the higher the softening temperature of the material is, and the higher the hardness of the material is, the more desirable cycle characteristics are obtained.

(Example 2)

Example 2 is different from Example 1 in that the reflective-side boundary layer 6 is not provided, as shown in Table 3. More specifically, in Example 2, optical disks were produced in such a manner that the reflective layer 3, the absorptive layer 4, the reflective-side protective layer 5, the recording layer 7, the light-incident-side boundary layer 8, and the light-incident-side protective layer 9 were formed one over another in this order on the substrate 1 with the surface 2 formed with a guide groove, followed by attaching the light-incident-side substrate 11 on the light-incident-side protective layer 9 with the first resin layer 10 formed therebetween. Whereas the reflective-side protective layer 5 with a thickness of 40 nm was made by adding $SiO_2$ of 20% content in terms of molar percentage to ZnS, and the reflective-side boundary layer 6 was made of $Ge_{70}N_{30}$ with a thickness of 5 nm in Example 1, the reflective-side protective layer 5 was made of $Ge_{70}N_{30}$ with a thickness of 45 nm, without formation of the reflective-side boundary layer 6 in Example 2. In Example 2, the thicknesses of the light-incident-side protective layers 9 of the respective sample disks were 1 nm, 20 nm, and 47 nm.

The substrate 1 was made of polycarbonate with 120 mm in diameter and 0.6 mm in thickness. The guide groove was formed according to the 4.7 GB DVD-RAM format in which a land track and a groove track were formed with a pitch of 1.2 µm and a groove depth of 70 nm.

Next, as shown in Table 3, optical disks as Comparative Example 2 were produced according to the forward layer formation. Specifically, the light-incident-side protective layer 9, the light-incident-side boundary layer 8, the recording layer 7, the reflective-side protective layer 5, the absorptive layer 4, and the reflective layer 3 were formed one over another in this order on the light-incident-side substrate 11 with the surface formed with a guide groove, followed by attaching the substrate 1 on the reflective layer 3 with a resin layer formed therebetween. In Comparative Example 2, similarly to Example 2, the reflective-side protective layer 5 was made of $Ge_{70}N_{30}$ with a thickness of 45 nm, without formation of the reflective-side boundary layer.

In Comparative Example 2, the thicknesses of the light-incident-side protective layers 9 of the respective sample disks were 1 nm, 20 nm, and 47 nm.

The light-incident-side substrate 11 was made of polycarbonate with 120 mm in diameter and 0.6 mm in thickness. The guide groove was formed according to the 4.7 GB DVD-RAM format in which a land track and a groove track were formed with a pitch of 1.2 µm and a groove depth of 70 nm.

Table 3

| Sample Name | Comparative Example 2 | Example 2 |
|---|---|---|
| Layer formation | forward | reverse |
| | light-incident-side substrate | substrate |
| 1st layer | $SiO_2$ light-incident-side protective layer | Al-3at.%Ti reflective layer, thickness: 100nm |
| 2nd layer | $Ge_{70}N_{30}$ boundary layer, thickness: 3 nm | $Ge_{70}Cr_{30}$ absorptive layer, thickness: 40 nm |
| 3rd layer | $Ge_{30}Sb_{13}Te_{52}Sn_5$ recording layer, thickness: 9 nm | $Ge_{70}N_{30}$ reflective-side protective layer, thickness: 45 nm |
| 4th layer | $Ge_{70}N_{30}$ reflective-side protective layer, thickness: 45 nm | $Ge_{30}Sb_{13}Te_{52}Sn_5$ recording layer, thickness: 9 nm |
| 5th layer | $Ge_{70}Cr_{30}$ absorptive layer, thickness: 40 nm | $Ge_{70}N_{30}$ boundary layer, thickness: 3 nm |
| 6th layer | Al-3at.%Ti reflective layer, thickness: 100 nm | $SiO_2$ light-incident-side protective layer |
| | reflective-side substrate (DVD003 of Nippon Kayaku Co., Ltd., thickness: 5 μm) was attached to resin layer. | light-incident-side substrate (DVD003 of Nippon Kayaku Co., Ltd., thickness: 5 μm) was attached to first resin layer. Sum of thicknesses of resin layer and light-incident-side substrate were 0.60mm. |

EP 1 477 978 A2

Similarly to Example 1, after the recording layer 7 of each of the optical disks was crystallized by the initializer using a laser beam, signals were recorded in the guide groove (groove track) and on the guide groove (land track) by the recording/reproducing apparatus 20 as shown in FIG. 2, and the recorded signals were reproduced. Recording characteristics in compliance with the format of the 4.7 GB DVD-RAM were obtained with respect to each of the sample disks in Example 2 and Comparative Example 2.

Next, repeating characteristics (cycle characteristics) of recording/erasing were evaluated in the similar manner as in Example 1. The results of experiments are as shown in Table 4.

Table 4

|  |  | 1mm | 20mm | 47mm |
|---|---|---|---|---|
| | Thickness of light-incident-side protective layer | | | |
| Comp. Ex.2 | number of cycles on groove track | 1 | 5 | 30 |
| | number of cycles on land track | 1 | 1 | 10 |
| Ex. 2 | number of cycles on groove track | 5 | 500 | 2,000 |
| | number of cycles on land track | 3 | 100 | 500 |

As is obvious from Table 4, the sample disks in Example 2 employing the reverse layer formation have improved cycle characteristics in the respective sample disks in which the thicknesses of the light-incident-side protective layers 9 are different from each other, as compared with the sample disks in Comparative Example 2 employing the forward layer formation. Particularly, in case that the thicknesses of the light-incident-side protective layers 9 were 20 nm and 47 nm, a difference in Example 2 and Comparative Example 2 was remarkably large. The cycle characteristics of the sample disk in Example 2 having a thickness of the light-incident-side protective layer 9 of 1 nm were inferior to those of the sample disks in Comparative Example 2 having thicknesses of 20 nm and 47 nm. Despite such a phenomenon, Example 2 is advantageous in shortening the tact time in layer formation.

A result of study on the material composing the first resin layer 10 reveals that there is a strong correlation between the softening temperature and hardness of the material, and repeating characteristics of recording/erasing. Namely, the higher the softening temperature of the material is, and the higher the hardness of the material is, the more desirable cycle characteristics are obtained.

As mentioned above, according to the inventive optical information recording medium, provided is a recording medium having a shortened layer formation tact time, and superior jitter characteristics, cross erasing characteristics, and cycle characteristics.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

The present invention pertains to an information recordable and erasable, phase-change optical disk, particularly to a 4.7GB DVD-RAM disk. Provided is a recording medium having a short tact time in layer formation, and superior jitter characteristics, cross erasing characteristics, and cycle characteristics. The recording medium has at least a reflective layer, a recording layer, a light-incident-side protective layer, a first resin layer, and a light-incident-side substrate in this order on a substrate formed with a guide groove. The first resin layer is formed over the recording layer by a gap between 1 nm and 50 nm.

**Claims**

1. An optical information recording medium capable of recording and reproducing information with use of laser light, wherein
   comprises at least a reflective layer, a recording layer, a light-incident-side protective layer, a first resin layer, and a light-incident-side substrate layer in this order on a substrate formed with a guide groove,
   said first layer is formed over said recording layer by a gap between 1 nm and 50 nm.

2. The optical information recording medium according to Claim 1, wherein said first resin layer is formed over said recording layer by a gap between 20 nm and 50 nm.

3. The optical information recording medium according to Claim 1 or 2, wherein said first resin layer has a softening temperature higher than the softening temperature of said light-incident-side substrate.

4. The optical information recording medium according to Claim 1 or 2, wherein said first resin layer has a hardness higher than the hardness of said light-incident-side substrate.

5. The optical information recording medium according to Claim 1 or 2, wherein said first resin layer has a thickness between 1 $\mu$m and 20 $\mu$m.

6. The optical information recording medium according to any one of Claims 1 to 5, wherein the medium has a property that satisfies the following two mathematical expressions, where n1 represents a refraction index of said light-incident-side protective layer at a wavelength of the laser light to be irradiated onto the medium for information reproduction, n2 represents a refraction index of said first resin layer at a wavelength identical to the wavelength of the laser light, and n3 represents a refraction index of said light-incident-side substrate at a wavelength identical to the wavelength of the laser light:

$$n1 \leqq n2 + 0.1$$

$$n1 \leqq n3 + 0.1.$$

7. The optical information recording medium according to Claim 6, wherein the medium has a property that satisfies the following two mathematical expressions:

$$n1 \leqq n2$$

$$n1 \leqq n3.$$

8. The optical information recording medium according to any one of Claims 1 to 7, further comprising, between said reflective layer and said recording layer, an absorptive layer, a reflective-side protective layer, and a reflective-side boundary layer in this order from said reflective layer side of the medium, and further comprising a light-incident-side boundary layer between said recording layer and said light-incident-side protective layer.

9. The optical information recording medium according to Claim 8, wherein:

said reflective layer has at least one of Ag and Al, as a main ingredient;
said absorptive layer has at least one of Ge, Cr, and Si, as a main ingredient.
said reflective-side protective layer has at least one of ZnS, a Zr oxide, and a Cr oxide, as a main ingredient;
said reflective-side boundary layer has a nitride, a nitroxide, or an oxide of at least one selected from the group consisting of Ge, Cr, Zr, Si, Al, and Te, or carbon, as a main ingredient;
said recording layer has at least one of Ge and Te, as a main ingredient;
said light-incident-side boundary layer has a nitride, a nitroxide, or an oxide of at least one selected from the group consisting of Ge, Cr, Zr, Si, Al, and Te, or carbon, as a main ingredient; and
said light-incident-side protective layer has at least one of an Al oxide, an Si oxide, an Mg oxide, and a fluoride, as a main ingredient.

10. The optical information recording medium according to Claim 8 or 9, wherein:

said reflective layer has a thickness between 50 nm and 150 nm;
said absorptive layer has a thickness between 20 nm and 60 nm;
said reflective-side protective layer has a thickness between 20 nm and 60 nm;
said reflective-side boundary layer has a thickness between 1 nm and 20 nm;
said recording layer has a thickness between 7 nm and 10 nm;
said light-incident-side boundary layer has a thickness between 1 nm and 20 nm; and
said light-incident-side protective layer has a thickness between 1 nm and 50 nm.

11. The optical information recording medium according to any one of Claims 1 to 7, further comprising, between said reflective layer and said recording layer, an absorptive layer, and a reflective-side protective layer in this order from said reflective layer side of the medium, and further comprising a light-incident-side boundary layer between said recording layer and said light-incident-side protective layer.

12. The optical information recording medium according to Claim 11, wherein:

said reflective layer has at least one of Ag and Al, as a main ingredient;
said absorptive layer has at least one of Ge, Cr, and Si, as a main ingredient;
said reflective-side protective layer has at least one of ZnS, a Zr oxide, and a Cr oxide, as a main ingredient;
said recording layer has at least one of Ge and Te, as a main ingredient;
said light-incident-side boundary layer has a nitride, a nitroxide, or an oxide of at least one selected from the group consisting of Ge, Cr, Zr, Si, Al, and Te, or carbon, as a main ingredient; and
said light-incident-side protective layer has at least one of an Al oxide, an Si oxide, an Mg oxide, and a fluoride, as a main ingredient.

13. The optical information recording medium according to Claim 11 or 12, wherein:

said reflective layer has a thickness between 50 nm and 150 nm;
said absorptive layer has a thickness between 20 nm and 60 nm;
said reflective-side protective layer has a thickness between 20 nm and 60 nm;
said recording layer has a thickness between 7 nm and 10 nm;
said light-incident-side boundary layer has a thickness between 1 nm and 20 nm; and
said light-incident-side protective layer has a thickness between 1 nm and 50 nm.

14. A method for producing an optical information recording medium capable of recording and reproducing information with use of laser light, the method comprising the steps in the order of:

forming a guide groove in a substrate;
forming at least a reflective layer, a recording layer, and a light-incident-side protective layer one over another in this order on the substrate formed with said guide groove; and
attaching a light-incident-side substrate on said light-incident-side protective layer with a first resin layer being formed therebetween, wherein
said first layer is formed over said recording layer by a gap between 1 nm and 50 nm.

15. The method according to Claim 14, wherein said first resin layer is formed over said recording layer by a gap between 20 nm and 50 nm.

16. A method for producing an optical information recording medium capable of recording and reproducing information with use of laser light, the method comprising the steps in the order of:

forming a guide groove in a substrate;
forming at least a reflective layer, a recording layer, and a light-incident-side protective layer one over another in this order on the substrate formed with said guide groove;
forming a first resin layer on said light-incident-side protective layer; and
attaching a light-incident-side substrate on said first resin layer with a second resin layer being formed therebetween; wherein
said first layer is formed over said recording layer by a gap between 1 nm and 50 nm.

17. The method according to Claim 16, wherein said first resin layer is formed over said recording layer by a gap between 20 nm and 50 nm.

18. The method according to any one of Claims 14 to 17, wherein said first resin layer has a thickness between 1 $\mu$m and 20 $\mu$m.

19. The method according to any one of Claims 14 to 18, wherein the medium has a property that satisfies the following two mathematical expressions, where n1 represents a refraction index of said light-incident-side protective layer at a wavelength of the laser light to be irradiated onto the medium for information reproduction, n2 represents a refraction index of said first resin layer at a wavelength identical to the wavelength of the laser light, and n3 represents a refraction index of said light-incident-side substrate at a wavelength identical to the wavelength of the

laser light:

$$n1 \leqq n2 + 0.1$$

$$n1 \leqq n3 + 0.1.$$

20. The optical information recording medium according to Claim 19, wherein the medium has a property that satisfies the following two mathematical expressions:

$$n1 \leqq n2$$

$$n1 \leqq n3.$$

# FIG.1

- 1 SUBSTRATE
- SUBSTRATE 2 SURFACE
- 3 REFLECTIVE LAYER
- 4 ABSORPTIVE LAYER
- 5 REFLECTIVE-SIDE PROTECTIVE LAYER
- 6 REFLECTIVE-SIDE BOUNDARY LAYER
- 7 RECORDING LAYER
- 8 LIGHT-INCIDENT-SIDE BOUNDARY LAYER
- 9 LIGHT-INCIDENT-SIDE PROTECTIVE LAYER
- 10 FIRST RESIN LAYER
- 12 SECOND RESIN LAYER
- 11 LIGHT-INCIDENT-SIDE SUBSTRATE

# FIG.2